# EUROPEAN PATENT APPLICATION

(11) **EP 3 437 529 A1**
(43) Date of publication of application: **06.02.2019**
(21) Application number: 17201727.9
(22) Date of filing: 14.11.2017
(51) Int. Cl.: A47J 37/06, A47J 37/07

(54) **AN ENVIRONMENTALLY FRIENDLY BARBECUE APPARATUS**

(30) Priority: 31.07.2017 CN 201710639654
(71) Applicant: Suzhou Tieta Machinery Manufacturing Co., Ltd., 215143 Suzhou Jiangsu (CN)
(72) Inventor: ZHAO, Jiawei, Suzhou, Jiangsu-Province 215143 (CN)
(74) Representative: Haseltine Lake LLP

(57) **Abstract**

The present invention aims to provide an environmentally friendly barbecue apparatus that can prevent oil droplets from falling onto the fuel (8). The barbecue apparatus comprises a barbecue grill ; the barbecue grill (1), under which is an oil collection device comprising an oil sump (2), comprises a plurality of spaced strip supports (1); the oil sump (2), provided under an interval between the corresponding supports (1) or provided below the supports (1), is provided obliquely with respect to the horizontal direction, with its lower end connected to an oil tank (4). Ingredients can be heated directly. With the oil tank (3) placed below the barbecue grill to collect the oil secreted by the ingredients themselves during the barbecue process, oil droplets are prevented from falling onto the fuel (8) to cause smoke and odor, with the advantages of high barbecue efficiency and health and environmental protection.

## Description

### FIELD OF THE INVENTION

The present invention belongs to the field of cooking utensils, and in particular to a barbecue apparatus.

### BACKGROUND OF THE INVENTION

Outdoor barbecue is becoming a popular lifestyle. However, during the barbecue process, meat ingredients tend to secrete oil, and oil droplets falling onto the fuel will produce odor and fumes, which not only affect the fun of barbecue but also cause damage to human health, and affect the surrounding environment as well.

For the above problems, the commonly used solution is to place ingredients on a metal dish or metal plate and heat the ingredients by heating the metal dish or metal plate. Although this solution avoids the fumes and odor, the barbecue efficiency is low because ingredients are heated indirectly.

### CONTENTS OF THE INVENTION

The technical problem to be solved by the present invention is to provide a barbecue apparatus that is healthy and environmentally friendly and has a high barbecue efficiency.

In order to solve the above technical problem, the present invention adopts the following technical solution: An environmentally friendly barbecue apparatus is provided, comprising a barbecue grill; the barbecue grill, under which is an oil collection device comprising an oil sump, comprises a plurality of spaced strip supports; the oil sump, provided under an interval between the corresponding supports or provided directly below the supports, is provided obliquely with respect to the horizontal direction, with its lower end connected to an oil tank.

Furthermore, with the support having a cross section not closed at the lower portion, the oil sump is fixed under the interval between two supports, with vertical projections of two adjacent edges of the two supports both within the oil sump.

Furthermore, the support has an inverted V-shaped cross section.

Furthermore, the support has a semicircular cross section.

Furthermore, the support has a cross section surrounded by a closed curve, and the oil sump is fixed directly below the supports, with the lower end of the cross section of the support located in the oil sump.

Furthermore, the support has a circular cross section.

Furthermore, the support has an oval cross section.

The present invention is advantageous in the following aspects: Ingredients can be heated directly; with the oil tank placed below the barbecue grill to collect the oil secreted by the ingredients themselves during the barbecue process, oil droplets are prevented from falling onto the fuel to cause smoke and odor, with the advantages of high barbecue efficiency and health and environmental protection.

### BRIEF DESCRIPTION OF THE DRAWINGS

The present invention will be further described below with reference to drawings.
Fig. 1 is a schematic side view of the present invention;
Fig. 2 is a cross-sectional view of Example 1 of the present invention;
Fig. 3 is a cross-sectional view of Example 2 of the present invention;
Fig. 4 is a cross-sectional view of Example 3 of the present invention;
Fig. 5 is a schematic view of the use of the present invention; and
Fig. 6 is a side view of the present invention in use.

List of reference numbers: 1. A support; 2. an oil sump; 3. an oil tank; 4. a barbecue apparatus; 5. a feeding device; 6. a combustion device; 7. a furnace body; and 8. fuel.

### DETAILED DESCRIPTION OF THE EMBODIMENTS

The present invention will be described below in detail with reference to drawings and embodiments.

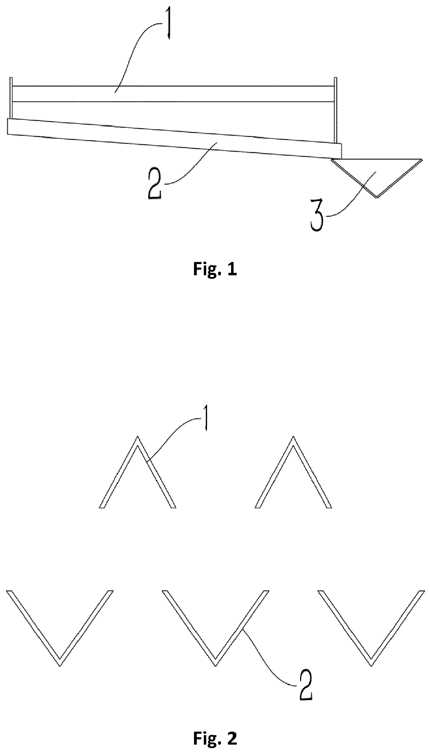

The environmentally friendly barbecue apparatus comprises a barbecue grill and an oil collection device; the barbecue grill, comprising a plurality of spaced strip supports 1, may be either assembled from a plurality of strip supports 1, or punched out from a single piece of metal plate into a plurality of strip supports 1. The oil collection device, arranged below the barbecue grill, is composed of an oil sump 2 and an oil tank 3, with the oil sump 2 provided obliquely with respect to the horizontal direction and having its lower end connected to the oil tank 3. The side view of the device is shown in Fig. 1.

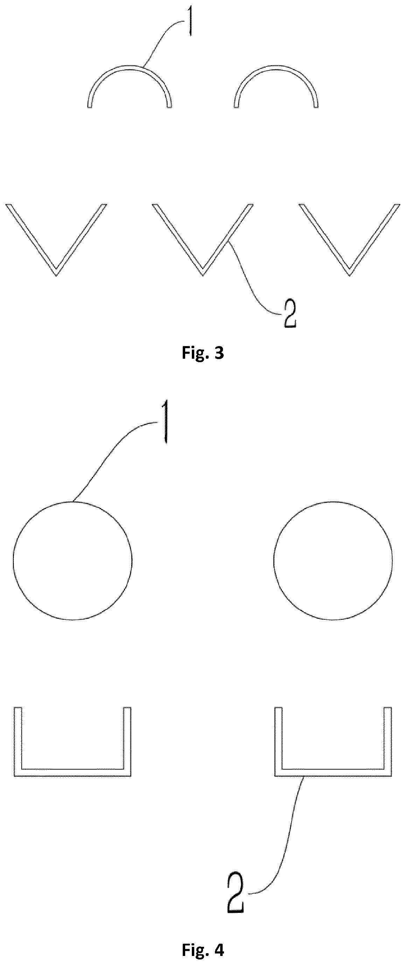

There are various combinations of the respective shapes of the supports 1 and the oil sump 2 as well as positional relationship therebetween, which constitute various embodiments of the present invention. Hereinafter, three specific embodiments will be described with reference to Figs. 4 to 6.

In Example 1 as shown in Fig. 2, the support 1 is inversely V-shaped, and the oil sump 2 has a V-shaped cross section and is provided at the interval of the corresponding supports 1, with the vertical projections of two adjacent edges of the two corresponding supports 1 both within the oil sump 2. An oil sump 2 is additionally provided at the outside of the supports 1 on both ends of the barbecue grill. When barbecue ingredients are placed on the supports 1, the oil that is secreted by the high-temperature barbecued meat ingredients will fall into the oil sump 2 along the surface of the supports 1 and then flow into the oil tank 3, thereby ensuring that the oil secreted by the ingredients themselves during the barbecue process will not drip onto the biomass particles, and avoiding smoke and odor generated by the oil droplets on the biomass particles during the barbecue process.

In Example 2 as shown in Fig. 3, the support 1 is semicircular, the vertical projections of two adjacent edges of the two supports 1 are both within the oil sump 2, and an oil sump 2 is additionally provided at the outside of the supports 1 on both ends of the barbecue grill.

In Example 3 as shown in Fig. 4, the support 1 is circular, and the oil sump 2 has a concave cross section and is provided directly below the support 1. With this arrangement, the oil secreted by the ingredients during the barbecue process flows to the lower end of the support 1 along the surface of the support 1, and finally falls into the oil sump 2, also possible to prevent oil droplets from falling onto the biomass particles.

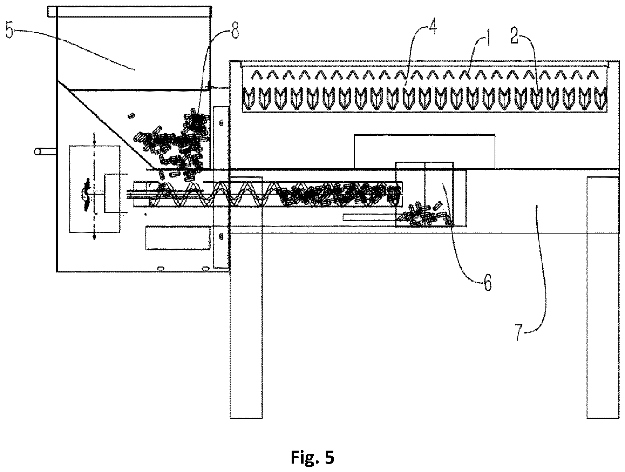

The use of the present invention is shown in Fig. 5. The barbecue apparatus 4 is arranged on the furnace body 1, the ingredients are placed on the support 1, and the fuel 8 is automatically added to the combustion device 6 under the barbecue apparatus 4 via the feeding device 5; after the fuel 8 burns, the flame rises via the interval of the oil sump 2 and barbecues the ingredients directly. The oil secreted by the ingredients will drip into the oil sump 2, and the fuel will not produce smoke and odor during the combustion process. Therefore, the present invention has the advantages of high barbecue efficiency and health and environmental protection.

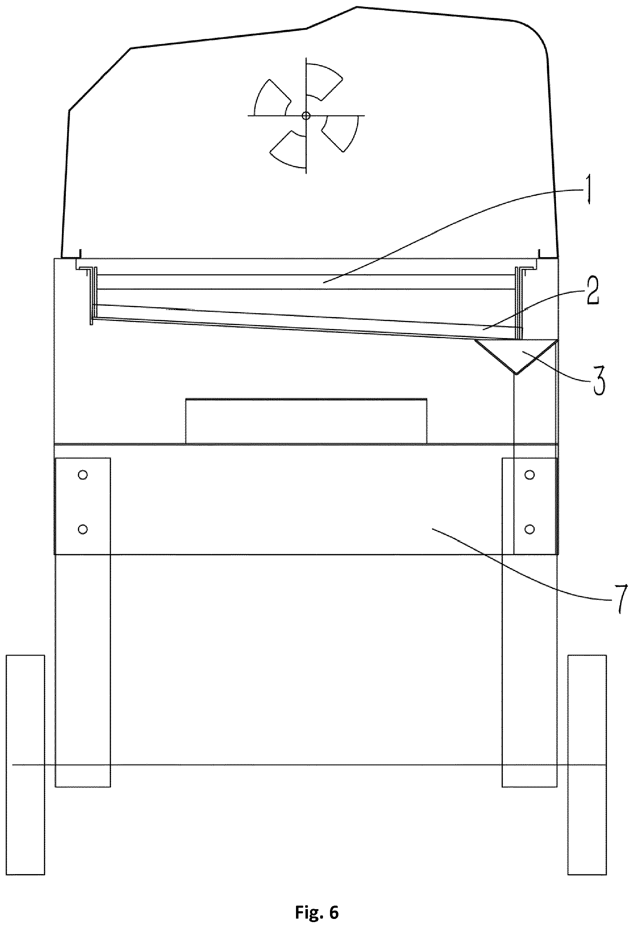

The installation method of the present invention is shown in Fig. 6. The oil sump 3 is directly fixed to the furnace body 7, both ends of the support 1 are fixed to the oil sump 2 by a bracket, and both ends of the oil sump 2 are respectively provided on the furnace body 7 by a connecting means.

It is necessary to emphasize that what is described above is only a preferred embodiment of the present invention and is not intended to limit the present invention in any way. Any and all simple amendments, equivalents, and modifications of the foregoing examples in accordance with the technical substance of the present invention are intended to be within the scope of the technical solution of the present invention.

## Claims

1. An environmentally friendly barbecue apparatus, comprising a barbecue grill, **characterized in that**: the barbecue grill, under which is an oil collection device comprising an oil sump, comprises a plurality of spaced strip supports; the oil sump, provided under an interval between the corresponding supports or provided directly below the supports, is provided obliquely with respect to the horizontal direction, with its lower end connected to an oil tank.

2. The environmentally friendly barbecue apparatus according to claim 1, **characterized in that**: with the support having a cross section not closed at the lower portion, the oil sump is fixed under the interval between the corresponding supports, with vertical projections of two adjacent edges of the two supports both within the oil sump.

3. The environmentally friendly barbecue apparatus according to claim 2, **characterized in that**: the support has an inverted V-shaped cross section.

4. The environmentally friendly barbecue apparatus according to claim 2, **characterized in that**: the support has a semicircular cross section.

5. The environmentally friendly barbecue apparatus according to claim 1, **characterized in that**: the support has a cross section surrounded by a closed curve, with the oil sump fixed directly below the support.

6. The environmentally friendly barbecue apparatus according to claim 5, **characterized in that**: the support has a circular cross section.

7. The environmentally friendly barbecue apparatus according to claim 5, **characterized in that**: the support has an oval cross section.
